(19) **Europäisches Patentamt**

**European Patent Office**

**Office européen des brevets**

(11) **EP 1 181 573 B1**

(12) **FASCICULE DE BREVET EUROPEEN**

(45) Date de publication et mention
de la délivrance du brevet:
**30.07.2003 Bulletin 2003/31**

(21) Numéro de dépôt: **00929618.7**

(22) Date de dépôt: **16.05.2000**

(51) Int Cl.⁷: **G01S 1/14**, F41G 7/28

(86) Numéro de dépôt international:
**PCT/FR00/01307**

(87) Numéro de publication internationale:
**WO 00/070364 (23.11.2000 Gazette 2000/47)**

(54) **PROCEDE ET DISPOSITIF DE GUIDAGE ELECTROMAGNETIQUE, APPLIQUES NOTAMMENT A LA POURSUITE DE CIBLES**

VERFAHREN UND VORRICHTUNG ZUR ELEKTROMAGNETISCHEN LENKUNG , INSBESONDERE ZUR ZIELVERFOLGUNG

METHOD AND DEVICE FOR MAGNETIC GUIDANCE, ESPECIALLY FOR TRACKING TARGETS

(84) Etats contractants désignés:
**AT BE CH CY DE DK ES FI FR GB GR IE IT LI LU MC NL PT SE**

(30) Priorité: **17.05.1999 FR 9906228**

(43) Date de publication de la demande:
**27.02.2002 Bulletin 2002/09**

(73) Titulaire: **Thales**
**75008 Paris (FR)**

(72) Inventeurs:
• **PERRIN, Jacques, Thales**
**94117 Arcueil Cedex (FR)**

• **BAUDAS, Sylvain, Thales**
**F-94117 Arcueil Cedex (FR)**

(74) Mandataire: **Lucas, Laurent Jacques et al**
**Thales Intellectual Property,**
**13, avenue du Président Salvador Allende**
**94117 Arcueil Cedex (FR)**

(56) Documents cités:
**GB-A- 2 279 529**   **US-A- 4 442 431**
**US-A- 4 501 399**   **US-A- 5 344 099**
**US-A- 5 473 331**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé et un dispositif de guidage électromagnétique, appliqués notamment à la poursuite de cibles. Elle s'applique notamment pour le guidage de missiles ou de munitions intelligentes en nombre quelconque, par exemple dans la poursuite de cibles.

Le guidage de missiles et de munitions intelligentes requiert une précision qui dépend de la nature de la cible, ainsi que de la taille et du principe de fonctionnement de la charge militaire associée.

Dans le cas de missiles tactiques à courte et très courte portée (entre 5 et 12 km de portée) seuls susceptibles d'être téléguidés, les plus longues portées nécessitant des modes d'autoguidage, la précision requise du guidage peut être résumée par les lignes suivantes.

Suivant le type de charge militaire la précision de guidage doit permettre à cette charge de remplir son office ; cette précision peut varier entre 0.1 mètre et cinq mètres. La plus grande précision s'applique à des petits missiles utilisant l'effet cinétique d'un pénétrateur contre des cibles de très petite dimension (drones ou missiles tactiques), la précision la moins grande est applicable à des missiles utilisant une charge militaire à éclat de plusieurs kilogrammes associée à une fusée de proximité contre des objectifs peu ou non blindés.

En téléguidage, le système repose sur un ou plusieurs capteurs déportés, en général sur la plate-forme de lancement, qui assurent la localisation de la cible et du ou des missiles (ou projectiles) lancés contre cette cible.

Compte tenu des impératifs de précision cités ci-dessus, il en résulte que la précision angulaire de ces capteurs ne devra pas être inférieure à celle-ci.

Ces capteurs utilisant un moyen électromagnétique (radar ou optique) ont un pouvoir de résolution limité par la diffraction. Si on s'impose un ordre de grandeur raisonnable pour le diamètre de l'ouverture de ces capteurs, à savoir 1 mètre pour les antennes radar et 0.1 mètre pour les optiques visibles ou infrarouges, on constate que dès la bande IV infrarouge (8-12 microns de longueur d'onde) la précision de localisation doit être meilleure que la tache de diffraction. Si le gain de précision par rapport à la tâche de diffraction est modeste en infrarouge, il est considérable pour les bandes radars.

En général, un tel bilan de précision n'est pas compatible avec la précision de pointage mécanique d'un capteur installé sur une plate-forme militaire, et le système nécessitera au minimum une stabilisation de la ligne de visée.

De plus, lorsque le capteur servant à la poursuite de la cible n'est pas confondu avec le capteur servant à localiser le ou les missiles, se pose un problème sérieux de collimation de ces capteurs quasiment irréalisable pour les plus grandes exigences de précisions.

Une façon élégante de résoudre ce problème est d'utiliser un capteur unique pour localiser cible et missile et d'effectuer la différence des mesures suivant le principe de la "double pesée" bien connu des physiciens. Ce principe a reçu le nom "d'écartométrie différentielle", il a le mérite de faire disparaître l'essentiel des erreurs instrumentales telles que décalage du zéro et de la totalité des erreurs de pointage dans le bilan de précision de localisation du missile par rapport à la cible.

Certaines erreurs instrumentales telles que les erreurs de gain ou de pente des mesures angulaires qui peuvent ne pas être identiques pour la mesure cible et missile sont déterministes et peuvent être compensées dans la mesure où elles peuvent être connues.

Il reste alors dans le bilan des erreurs que les termes non absolument déterministes comme les erreurs liées aux bruits du système qui incluent parmi d'autres des bruits d'origine thermique et des bruits liés à l'environnement de propagation des ondes électromagnétiques employées.

Lorsque l'on désire fonctionner de façon relativement indépendante des conditions d'éclairement et de visibilité, on est conduit à choisir un capteur de type radar.

La solution connue de ce type est largement appliquée à des systèmes de missiles tactiques notamment antiaériens.

Dans ces systèmes, un radar de poursuite est muni de plusieurs voies de mesure en site et gisement qui assurent en temps partagé les mesures de position de la cible et de un et quelquefois deux missiles qui sont astreints à demeurer dans le champ de vision du capteur généralement de l'ordre de grandeur du degré d'angle. Pour cette raison, le ou les missiles restent sensiblement alignés sur la droite mobile allant du capteur radar à la cible d'où le nom de guidage en alignement de ce mode de fonctionnement.

Dans la mesure où la position du missile est déportée par rapport à la plateforme de guidage, une liaison de transmission (télécommande) est nécessaire pour communiquer au missile soit sa position soit plus généralement des ordres de correction de trajectoire.

La localisation d'un missile et à fortiori de munitions intelligentes de dimension plus modeste, nécessite que la signature radar de ce missile ou de ces munitions soit renforcée au moyen d'un "répondeur" radar qui vient s'ajouter au nécessaire récepteur de télécommande. On conçoit qu'un tel ensemble soit d'une complexité de nature à grever le bilan de masse et de coût des missiles auxquels ils s'appliquent.

Une solution plus simple a été appliquée, surtout en optique, dans laquelle le ou les missiles se localisent eux-mêmes par rapport à un axe théorique de guidage associé à un faisceau directeur.

D'où le nom de navigation sur faisceau de ce type de guidage, connu sous le nom de "Beam Rider" dans la littérature anglo-saxonne. Pour cela, un projecteur de faisceau spatialement modulé est calé mécaniquement sur l'axe de détection d'un capteur de poursuite.

Un récepteur spécial à bord du missile décode la modulation du faisceau et détermine sa position par rapport à l'axe théorique de guidage et en déduit les manoeuvres de correction éventuelles.

La méthode employée de codage de l'espace est en général un balayage bi-dimensionnel d'un pinceau lumineux ou d'un double balayage en site et gisement de deux pinceaux ayant une forme étroite dans un plan et ouverts en éventail dans l'autre. L'une et l'autre des méthodes ainsi que leurs nombreuses variantes ont pour dénominateur commun d'être limité en précision par la dimension de la tache de diffraction et par la précision de la collimation du projecteur de faisceau et du capteur de poursuite ainsi que de la précision de la poursuite mécanique.

Il est possible d'améliorer légèrement cette précision au prix d'une plus grande complexité :

Si les conditions de stationnarité de la propagation le permettent, on peut affiner la précision de mesure en interpolant entre plusieurs positions du faisceau et faire descendre la précision de mesure légèrement au-dessous de la tache de diffraction sans pouvoir espérer beaucoup mieux que le quart ou la moitié de celle-ci. Pour les erreurs de collimation, celles-ci peuvent en principe être mesurées et compensées au prix d'un système complexe d'autocollimation.

Les erreurs de poursuite, sauf lorsque la boucle de poursuite est refermée manuellement à travers un opérateur humain, sont déterminées au moyen d'un dispositif de poursuite automatique ; il est donc en théorie possible de faire la correction inverse dans le codage du faisceau pour que la mesure faite par le missile ait pour origine la position de la cible dans le champ d'observation et non une référence mécanique fixe.

Toutefois du fait de leur prix et de leur complexité, ces raffinements sont rarement rencontrés dans la pratique, ce qui limite l'emploi connu de la navigation sur faisceau à des systèmes de portée très courte (au plus 5 à 6 km) et utilisant des longueurs d'onde optiques, en général celle d'un laser fonctionnant dans le visible ou le proche infrarouge (au voisinage de 1 micron de longueur d'onde). Par ailleurs, les performances sont dépendantes des conditions d'éclairement et de visibilité, de façon inhérente à tout système optique.

Les systèmes à faisceau battant ci-dessus décrits ne sont pas susceptibles d'être étendus aux gammes d'onde radar, car pour des dimensions praticables d'antenne dans les missiles en jeu, ils ne permettent pas la précision requise.

Pour faire fonctionner le guidage sur faisceau dans le domaine du radar, il a été imaginé d'utiliser le principe connu sous le nom de balayage conique ou scanning, il s'agit en fait d'une variante des principes ci-dessus, le balayage mécanique étant obtenu en faisant tourner le diagramme de rayonnement d'une antenne autour d'un axe dépointé par rapport à son axe de révolution.

Il en résulte que le gain dans toute direction non confondue avec l'axe de rotation se trouve modulé de façon périodique du temps avec une phase et une amplitude directement liées aux coordonnées polaires de cette direction dans le champ d'observation.

Pour un radar, on peut ainsi moduler à la fois le gain à l'émission et à la réception, ce qui est la solution la plus simple, bien qu'en principe la modulation d'une seule voie soit suffisante.

Si la voie de l'émission est modulée, la modulation est facilement détectée par un récepteur de contre-mesures, et une émission de brouillage modulée à la même fréquence fera immanquablement perdre la poursuite, ce qui rend un tel dispositif très sensible au brouillage par un brouilleur même si ce dernier est porté par la cible. La seule modulation à la réception est un peu moins fragile mais n'est pas utilisable pour un guidage sur faisceau, car l'émission n'étant plus modulée, le missile ne peut se localiser seul.

La technique du balayage conique a été abandonnée pour les radars en raison de sa sensibilité au brouillage, et également aux autres causes de fluctuation d'amplitude du signal reçu, telles que le caractère non stationnaire des conditions de propagation vis-à-vis des vitesses de balayage mécanique nécessairement assez lentes.

Un but de l'invention est de pallier les inconvénients précités, en permettant notamment le guidage d'engins par rapport à un faisceau radar sans risques de brouillage. A cet effet, l'invention a pour objet un procédé de guidage électromagnétique d'au moins un engin, caractérisé en ce que le guidage est réalisé par rapport à l'axe du faisceau d'une antenne monopulse, par un codage dans l'espace du faisceau.

L'invention a également pour objet un dispositif pour la mise en oeuvre du procédé ci-dessus.

L'invention a pour principaux avantages qu'elle permet un guidage d'engins par rapport au faisceau d'antenne tout en assurant des mesures de position d'une cible, qu'elle permet une réalisation très simple des récepteurs, qu'elle permet le guidage d'engins, très rustiques ou de très petite dimension, qu'elle peut se combiner facilement à d'autres moyens de guidage tels que des moyens optiques ou d'autodirecteurs pour obtenir un guidage multimode et cela sans ajouter beaucoup à la complexité du système, qu'elle permet une très bonne précision des mesures de position des engins, qu'elle permet d'envoyer simultanément des informations vers les engins, et qu'elle est économique.

D'autres caractéristiques et avantages de l'invention apparaîtront à l'aide de la description qui suit faite en regard de dessins annexés qui représentent :

- la figure 1, une représentation des diagramme somme et différence d'une antenne monopulse ;
- la figure 2, une représentation dans un diagramme de Fresnel d'un signal obtenu au niveau du récepteur d'un engin guidé, par la combinaison d'un signal produit par la voie somme et d'un signal produit par la voie différence d'une antenne monopulse ;
- la figure 3, un exemple de mise en oeuvre possible du procédé selon l'invention par un exemple de modulation du signal produit par une voie différence d'une antenne monopulse ;
- la figure 4, la modulation globale du signal obtenu au niveau du récepteur d'un engin guidé ;
- la figure 5, un exemple de réalisation possible de moyens de réalisation d'un faisceau de guidage d'engin, selon l'invention ;
- la figure 6, un exemple de réalisation possible d'un récepteur disposé dans un engin guidé par le faisceau précité ;
- la figure 7, la position dans le temps de signaux de corrélation permettant de reconstituer au niveau d'un récepteur, la position de ce dernier par rapport à l'axe de l'antenne monopulse, par la connaissance des signaux produit par les voies somme et différences de cette antenne.

Le procédé selon l'invention utilise une même antenne monopulse pour réaliser un codage spatial susceptible d'être employé dans un système de navigation sur faisceau. L'antenne monopulse est par exemple disposée sur une plate-forme de lancement à partir de laquelle sont lancés puis guidés les engins.

Dans un système de mesure dite « monopulse », la voie de réception de l'antenne est dédoublée dans chaque plan site et gisement en une voie somme et une voie différence. Le signal reçu sur la voie différence est proportionnel en amplitude au dépointage de la cible et en phase ou en opposition de phase avec le signal somme reçu de la même cible. Il en résulte qu'un traitement cohérent en phase de ces deux signaux permet de restituer l'angle de dépointage $\varepsilon$ avec son signe, selon la relation (1) suivante:

$$\varepsilon = \frac{\vec{\Delta} \cdot \vec{\Sigma}}{\Sigma^2} \quad (1) \vec{\Delta} \ et \ \vec{\Sigma} \ \text{étant respectivement les signaux reçus sur}$$

les voies différence et somme, exprimés sous forme vectorielle prenant en compte l'amplitude et la phase.

Un tel traitement peut se faire en un temps égal à celui de l'intégration cohérente du radar, par exemple une impulsion d'où le nom de monopulse.

Dans un tel système tout brouilleur conventionnel porté par la cible ne fera que renforcer de façon cohérente les signaux somme et différence et facilitera la mesure angulaire au lieu de la brouiller, d'où la grande difficulté à brouiller la mesure angulaire des radars monopulse par des brouilleurs d'autoprotection. Une mesure monopulse permet par ailleurs d'obtenir une grande précision.

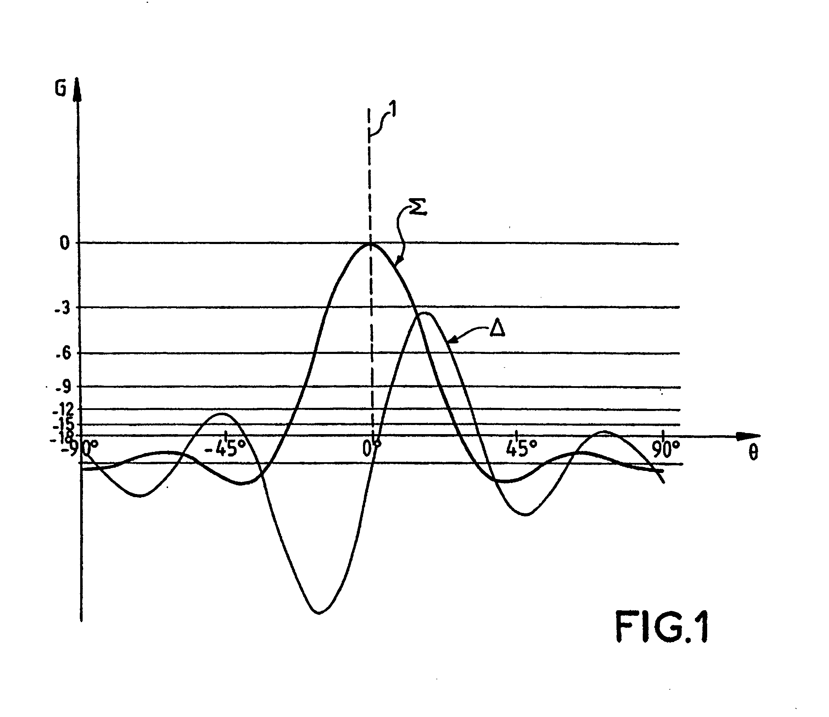

La figure 1 illustre les diagrammes connus des voies somme $\Sigma$ et différence $\Delta$ d'une antenne monopulse dans un système d'axes, où l'axe des ordonnées représente le gain G d'antenne en fonction de l'angle d'espace $\theta$, représenté par l'axe des abscisses, par rapport à l'axe de l'antenne 1. Le diagramme somme est maximum sur cet axe, et symétrique par rapport à ce dernier. Dans un radar à antenne monopulse, le signal reçu sur la voie différence est proportionnel en amplitude au dépointage de la cible, repéré selon l'axe des angle $\theta$, et en phase ou en opposition de phase avec le signal reçu de la même cible sur la voie somme. Il en résulte qu'un traitement cohérent en phase de ces deux signaux permet de restituer l'angle de dépointage $\varepsilon$ avec son signe comme indiqué par la figure (1) précédente.

Selon l'invention, une antenne monopulse est donc utilisée pour générer un faisceau codé dans l'espace, en vue de guider un ou plusieurs engins, par exemple des missiles ou projectiles, qui peuvent être en nombre indéterminé. Ce codage du faisceau permet à un engin, équipé de moyens de réceptions appropriés de se situer par rapport à l'axe du faisceau. Ce codage est par exemple réalisé par une modulation appropriée des signaux rayonnés par les diagrammes somme et différence. Un récepteur disposé alors dans un engin permet de déterminer la position de ce dernier par rapport aux diagrammes de rayonnement de l'antenne, et donc sa position par rapport à l'axe de l'antenne. La détermination de cette position est effectuée par décodage ou démodulation des signaux captés par le récepteur.

Pour conserver la qualité intrinsèque du traitement monopulse, le procédé selon l'invention doit exploiter un signal somme et un signal différence en amplitude et en phase. Il faut donc qu'à partir d'un simple récepteur, un missile soit par exemple en mesure de déterminer les signaux qui viennent de la voie somme et ceux qui viennent de la voie différence c'est-à-dire qu'il puisse déterminer les amplitudes de signaux sommes et différences cohérents en phase. En fait, il faut parvenir à mélanger deux signaux, l'un issu de la voie somme et l'autre issu de la voie différence, qui sont sur la même fréquence porteuse mais qui doivent pouvoir être séparés à la réception. Pour cela, de l'énergie est rayonnée sur les diagrammes somme $\Sigma$ et différence $\Delta$, et les énergies ainsi rayonnées sur le diagramme somme et sur le diagramme différence sont marquées au moyen d'une modulation distincte, d'un diagramme à l'autre, pour pouvoir les séparer à la réception. Les grandeurs à déterminer étant des amplitudes, on effectue des modulations d'amplitudes de préférence à des modulations de phases ou de fréquences pour lesquelles l'amplitude de l'onde porteuse n'est pas restituée.

L'invention utilise avantageusement le fait que la structure même du spectre d'un signal modulé en amplitude est la somme du spectre de la modulation transposé autour de la fréquence de l'onde porteuse et d'une raie sur la fréquence de cette porteuse. En notant $A(2j\pi f)$ la transformée de Fourier de la modulation, la transformée de Fourier de l'onde modulée, notée $M(2j\pi f)$ est donnée par la relation suivante :

$$M(2j\pi f) = A_0 [\delta(f - F_0) + \delta(f + F_0)] + B.A[2j\pi(f - F_0)] \qquad (2)$$

pour une fréquence f comprise entre $-\infty$ et $+\infty$.

Le premier terme $A_0 [\delta(f - F_0) + \delta(f + F_0)]$ représente la modulation de la porteuse et le deuxième terme $B.A[2j\pi(f - F_0)]$ représente la modulation des bandes de fréquences latérales. $F_0$ représente la fréquence de l'onde porteuse et $A_0$ est un scalaire qui caractérise l'amplitude de cette porteuse. B est un autre scalaire, positif ou négatif, qui caractérise ce que l'on peut appeler la profondeur de modulation. Le symbole $\delta$ représente la fonction de Dirac. $|A_0| \geq |B|$ est une condition pour qu'il n'y ait pas notamment de surmodulation de la porteuse par rapport aux bandes latérales.

Si on supprime le premier terme, on obtient le spectre d'un signal dit à porteuse supprimée. Si on rajoute à un signal modulé en amplitude à porteuse supprimée un signal sinusoïdal synchrone en amplitude et en phase avec la porteuse, on retrouve un signal modulé en amplitude dont la profondeur de modulation est fonction de l'amplitude comparée du signal initial et de la porteuse ainsi rajoutée. Selon l'invention, on transmet cette porteuse rajoutée sur le diagramme somme et une modulation d'amplitude à porteuse supprimée sur le diagramme différence. En d'autres termes, il y a superposition par exemple d'une onde pure continue, dite CW dans la littérature anglo-saxonne, et d'une onde modulée en amplitude à porteuse supprimée sur le diagramme différence, et cela pour permettre de reconstituer au niveau du récepteur de chacun des engins guidés un signal modulé en amplitude. Le taux de modulation de ce signal et sa phase sont caractéristiques du dépointage de l'engin, plus précisément de sa position par rapport à l'axe de l'antenne monopulse, qui est en fait l'axe de guidage des engins. Le taux de modulation, qui correspond en fait à la profondeur de modulation précitée, donne la valeur du dépointage, alors que le signe de la phase indique de quel côté de l'axe de l'antenne se situe l'engin.

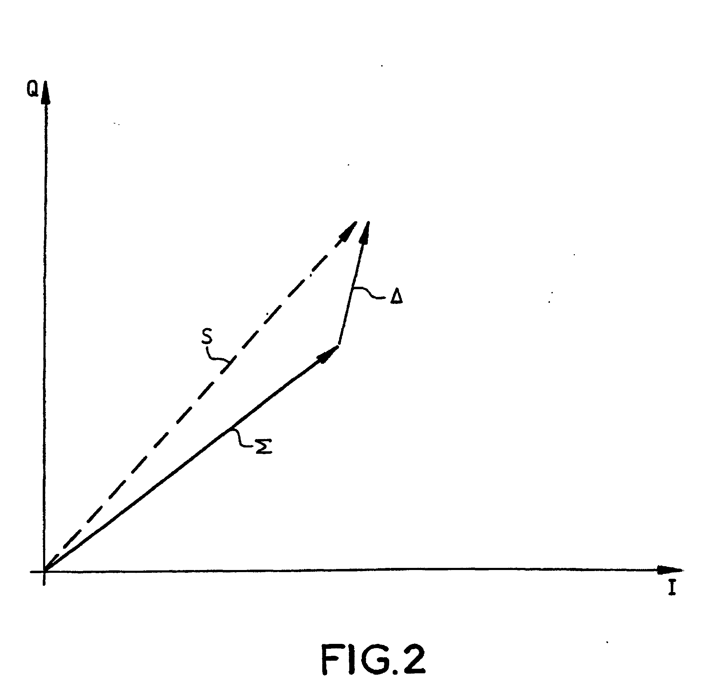

La figure 2 illustre, dans un diagramme de Fresnel, ce mélange de signaux. Le signal S reçu par le récepteur d'un engin guidé, est la somme du signal somme $\Sigma$ et du signal différence $\Delta$ modulé en amplitude. Le signal somme $\Sigma$ est par exemple une onde continue CW et le signal différence $\Delta$ une onde modulée selon le deuxième terme de la relation (2) précédente.

A la réception, la démodulation d'amplitude fournit donc le signal de modulation avec un signe et une amplitude caractéristiques du dépointage du récepteur par rapport au faisceau monopulse, plus précisément par rapport à l'axe de l'antenne monopulse. Pour retrouver le rapport de phase et d'amplitude des signaux somme et différence qui donne le dépointage selon la relation (1), il faut pouvoir reconstituer $A_0$ et B.

Une façon selon l'invention de retrouver les signaux issus des diagrammes somme et différence est par exemple de déterminer à la réception la profondeur de modulation pour l'amplitude et de déterminer le signe du signal modulé en comparant la phase du signal périodique démodulé à celle d'une horloge recalée par un signal de synchronisation transmis sur le canal somme. Il reste à trouver des formes d'onde pour la modulation, qui sont faciles à mettre en oeuvre et qui permettent facilement de retrouver la profondeur de modulation.

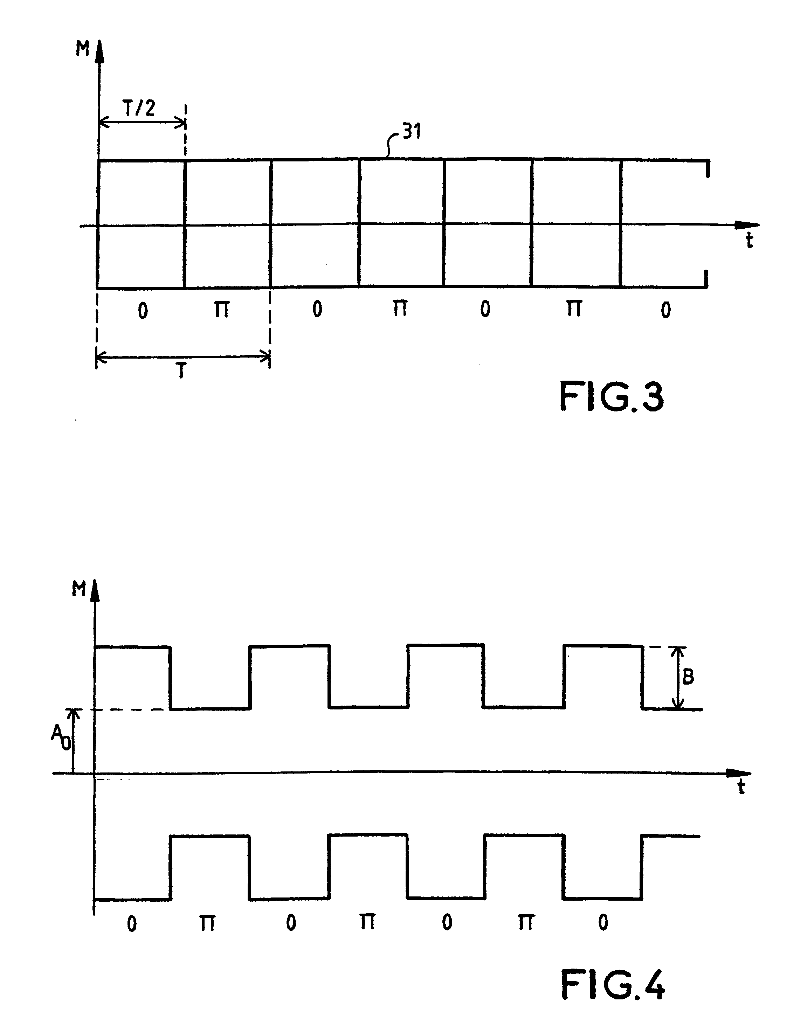

La figure 3 illustre une forme de modulation selon l'invention qui permet avantageusement de retrouver facilement la profondeur de modulation. Cette modulation est une modulation carrée de phase 0, $\pi$. Dans ce cas, l'amplitude de la modulation est carrée, à valeur moyenne nulle, et d'une demi-période à l'autre la phase passe de 0 à $\pi$, puis de $\pi$ à 0, et ainsi de suite. La figure 3 présente cette modulation 31 dans un système d'axes, où les abscisses t représentent le temps et les ordonnées M la modulation. En dessous de la représentation de la modulation 31, figure la phase de la modulation correspondant, 0 ou $\pi$ correspondant à la demi-période $T/2$. Le passage de la phase de 0 à $\pi$, revient à décaler de la demi-période $T/2$ la modulation, d'où la forme résultante telle que représentée par la figure 3. Cette modulation n'est autre que le résultat d'une modulation carrée à porteuse supprimée, en raison de la valeur moyenne nulle de la modulation.

La figure 4 présente, dans le même système d'axes M, t, la forme du signal modulé obtenu au niveau d'un récepteur. La modulation de la figure 3, exercée sur le signal émis par la voie différence $\Delta$ est alors sommée au signal de la voie somme $\Sigma$, dont l'amplitude est $A_0$, le signal variant en fait entre $+A_0$ et $-A_0$. La profondeur de modulation B est donnée par l'écart entre l'amplitude $A_0$ et l'amplitude maximum de la modulation. Cet écart est très facile à obtenir. Il est proportionnel au gain $G_\Delta$ de l'antenne sur la voie différence, ce gain définissant le diagramme d'antenne comme l'illustre la figure 1. De même, l'amplitude $A_0$ est proportionnelle, dans le même rapport de proportion, au gain d'antenne

$G_\Sigma$ sur la voie somme. Le rapport $G_\Delta/G_\Sigma$ donne la valeur du dépointage par rapport à l'axe 1 de l'antenne, conformément à la relation (1), où les signaux $\vec{\Delta}$ *et* $\vec{\Sigma}$ sont respectivement proportionnels aux gains $G_\Delta$ et $G_\Sigma$.

Il reste à définir de quel côté de cet axe se situe le récepteur. Cette situation est définie par le signe de la phase. Pour exploiter ce signe, il est cependant nécessaire de connaître la phase à l'origine, c'est-à-dire la référence la phase de référence du signal différence démodulé. Pour déterminer ainsi la phase de la modulation, il est alors par exemple possible d'utiliser un signal de synchronisation préliminaire transmis immédiatement avant une mesure de position. A cet effet, ce signal comporte par exemple un signal d'horloge dont le front montant est par exemple calé sur le passage de la phase 0 à la phase $\pi$, ce front étant pris en compte par un récepteur. Ce signal de synchronisation préliminaire peut par ailleurs servir à marquer la mesure comme étant une mesure en site ou en gisement, ce qui évite notamment de transmettre simultanément sur les voies différence $\Delta$ en site et différence $\Delta$ en gisement.

Le signal de synchronisation peut aussi être un signal modulé en amplitude suivant un code pseudoaléatoire prédéfini, comprimé au moyen d'un corrélateur à la réception.

Le même canal de transmission qui permet d'envoyer des mots de synchronisation site et gisement permet aussi d'envoyer vers le ou les engins guidés l'erreur de position de la cible, objet de la poursuite, en site ou en gisement mesurée par le radar, au moyen des diagrammes site et gisement de la même antenne monopulse, c'est-à-dire avec les mêmes causes d'erreur, ce qui permet par différence de déterminer une valeur d'écartométrie différentielle entre les engins guidés et la cible qui élimine la partie principale des erreurs de mesure dues aux imperfections du diagramme monopulse et aux erreurs de poursuite.

Il est possible d'utiliser d'autres formes de modulations que celle illustrée relativement à la figure 3, pourvu qu'elles soient par exemple périodiques et de valeur moyenne nulle. Il est ainsi possible d'utiliser une succession d'impulsions de signes alternés, dont la modulation à porteuse supprimée est une succession d'impulsions modulées en phase 0, $\pi$.

Une autre solution peut consister par exemple à utiliser pour la modulation un code pseudoaléatoire de valeur moyenne nulle et de longueur finie. En effectuant la corrélation du signal démodulé à la réception avec ce code, on obtient un signal dont le signe et l'amplitude représente l'écart par rapport au centre du faisceau, la valeur moyenne du signal reçu étant la valeur du signal somme. La corrélation du signal provenant de la démodulation de l'enveloppe du signal reçu, avec le code utilisé à l'émission fournit en fait une impulsion dont l'amplitude rapportée à la valeur moyenne de l'amplitude du signal reçu et le signe, sont équivalent au rapport $G_\Delta/G_\Sigma$ d'un récepteur monopulse classique. Une difficulté peut notamment provenir du fait que lorsque le dépointage est faible, le signal démodulé peut être noyé dans le bruit, et l'on ne sait pas alors à quel instant échantillonner ce bruit comme représentant la mesure, à moins de disposer d'une synchronisation qui permet de connaître l'instant qui correspond au pic de corrélation de la voie différence $\Delta$.

Pour obtenir cette synchronisation, il est possible d'effectuer une transmission préliminaire sur la voie somme avancée d'une largeur d'impulsion non comprimée, elle-même modulée en amplitude tout ou rien par un autre code pseudoaléatoire, appelé code sigma. A la réception, ce code sigma est par exemple utilisé par un corrélateur afin de déterminer de façon exacte l'instant de corrélation et synchroniser l'instant d'échantillonnage des voies différence transmises séquentiellement une période T et deux périodes T après le code de synchronisation. Une variante du procédé selon l'invention peut par exemple consister à émettre sur les deux voies différence en même temps avec deux codes orthogonaux entre eux.

Il convient par ailleurs de noter qu'il existe en début de guidage une phase dite de ralliement, pendant laquelle l'engin guidé initialement et placé à une certaine distance angulaire du faisceau de guidage, doit rallier ce dernier. Cette distance initiale n'est en général pas compatible de l'ouverture du faisceau de guidage trop étroit à proximité d'une antenne monopulse. Il est alors préférable de prévoir un système annexe pour déterminer la position de l'engin par rapport au faisceau de guidage pendant cette phase relativement courte, où l'engin est à courte distance. Cela peut par exemple être réalisé avec un écartomètre optique de ralliement, les mesures pouvant être envoyées à l'engin via l'émetteur du radar. En général, la proximité de l'engin permet cette liaison même si ce dernier est hors du diagramme principal de l'antenne du radar. On peut néanmoins recourir à une antenne d'émission plus ouverte pour cette phase si l'on désire un maximum de sécurité pour cette liaison. Si une telle antenne de ralliement est envisagée, elle peut elle-même être monopulse, et le guidage initial de ralliement peut alors se faire sur le même procédé de navigation sur faisceau, ou « beam riding », que celui développé précédemment, mais avec le risque éventuel de voir ces mesures fortement perturbées en raison de la proximité du sol et de l'effet connu de multi-trajet qui en résulte.

En phase de guidage, et plus particulièrement à longue distance, on n'a guère besoin de la dynamique de mesure d'une antenne monopulse classique, alors qu'au contraire en fin de ralliement, on peut chercher le maximum de dynamique de la mesure d'angle. En jouant sur la puissance du signal émis sur la voie différence par rapport à la puissance de celui émis sur la voie somme, on peut par exemple réaliser dans des limites liées à la forme des diagrammes et des rapports signal à bruit une sorte de zoom électronique qui permet d'optimiser à la fois le domaine de capture de l'engin pour le ralliement et sa précision de localisation à grande distance.

Il est encore possible, pour localiser la cible, d'utiliser la mesure se faisant au sol à partir de l'énergie rétro-réfléchie par la cible et reçue sur le diagramme somme après le retard de propagation.

Il est à noter que le radar de poursuite ainsi réalisé ne possède qu'une seule voie de réception, contrairement aux trois voies d'un radar monopulse classique. Les mesures d'écartométrie de la cible peuvent bien sûr être utilisées dans une boucle de poursuite, mais elles peuvent également être transmises via l'émetteur vers le ou les engins à guider, avec une modulation appropriée, pour que l'engin effectue notamment la détermination de sa position de façon différentielle par rapport au but et élimine la plus grande partie des erreurs de poursuite. Cette même voie de transmission vers l'engin peut aussi être utilisée pour fournir à l'engin toute information dont il a besoin pour optimiser son guidage, telles que par exemple les données de cinématique correspondant aux vitesses angulaires du faisceau de guidage, à la distance et à la vitesse radiale de la cible. Ainsi, l'émetteur au sol peut utiliser le diagramme-d'antenne pour transmettre des informations aux engins, notamment pour leur communiquer la position d'une cible poursuivie par rapport au faisceau d'antenne, ce qui permet de déterminer leurs positions relatives par rapport à la cible, ainsi que toutes informations précitées ou autres utiles à l'optimisation de leur guidage.

L'extrême simplicité de la voie de réception à bord de l'engin guidé, permet par exemple d'envisager de combiner celle-ci avec d'autres moyens de guidage tels que ceux nécessaires à une navigation sur faisceau optique ou encore des moyens de guidage tel qu'un autodirecteur de fin de course pour obtenir un guidage multimode sans pour autant ajouter beaucoup à la complexité de ces autres moyens de guidage. Enfin, cette même simplicité permet d'envisager le mode de guidage selon l'invention à des engins, par exemple des missiles ou des projectiles, très rustiques ou de très petite dimension.

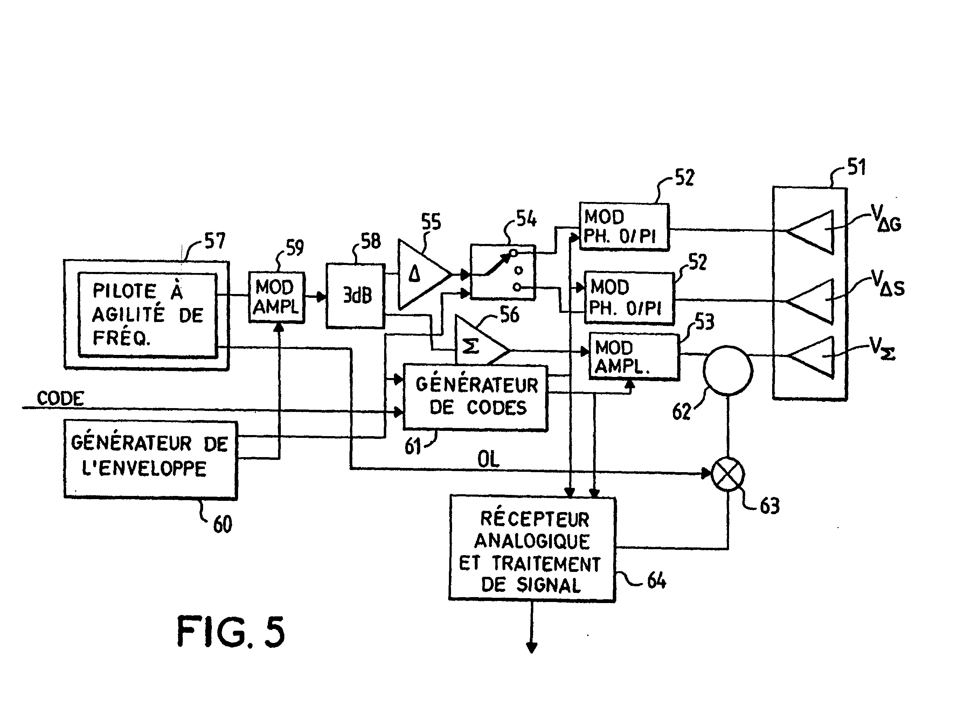

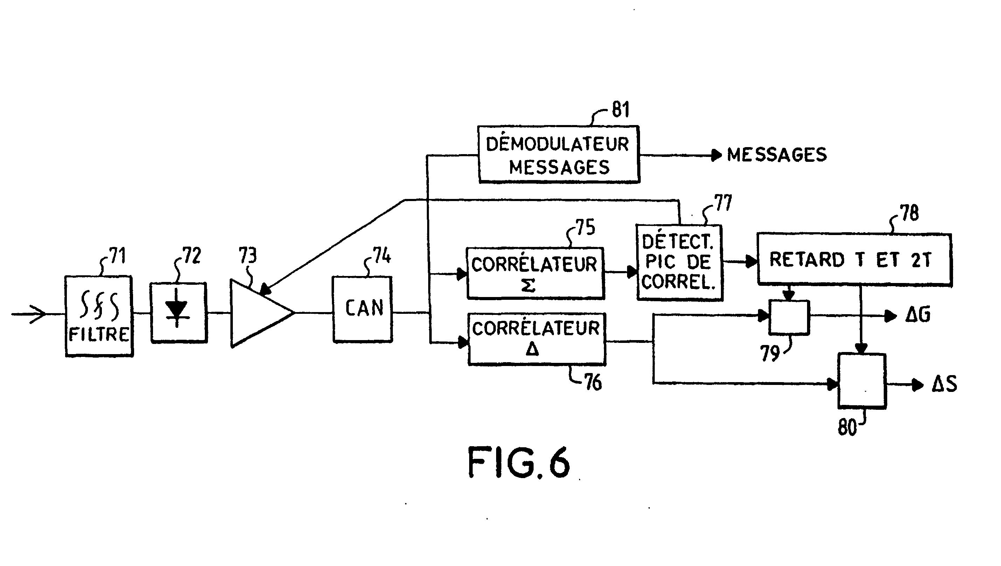

La figure 5 illustre un exemple de réalisation possible pour la mise en oeuvre du procédé selon l'invention. Plus particulièrement, cette figure présente un mode de réalisation possible de la partie radar qui émet notamment le faisceau de guidage, cette partie étant par exemple située sur une plate forme. La figure 6 illustre un mode de réalisation possible d'un récepteur embarqué dans un engin.

Si on se limite par exemple à un ordre de grandeur du mètre pour le diamètre d'antenne, le choix des bandes de fréquences d'émission peut se faire notamment entre les bandes Ku. Ka et W. Un critère de choix est lié aux exigences opérationnelles de fonctionnement, par exemple par temps de brouillard ou de pluie Les effets de ces phénomènes atmosphériques sont notamment une absorption exponentielle par rapport à la distance de propagation exprimée en décibels par kilomètre. Un second effet, dans le cas de la pluie, est une rétroréflexion sur les gouttes de pluie génératrice d'échos de pluie dont le comportement est celui d'échos mobiles avec une vitesse radiale moyenne et une largeur de spectre dépendant de la longueur d'onde du vent et de la turbulence atmosphérique. Des mesures et des expériences effectuées par la déposante ont montré que jusqu'à des distances de l'ordre de 10 km, l'absorption par l'eau n'est pas un vrai problème. Par contre, les échos de pluie peuvent être inacceptables au-delà de la bande Ku en raison de la quasi-impossibilité de les éliminer par filtrage Doppler dans la voie de poursuite de la cible. Il semble donc avantageux de choisir la bande Ku, la bande Ka pouvant par exemple aussi être utilisée si le fonctionnement par temps de pluie n'est pas exigé. Dans ce dernier cas, la bande W peut aussi par exemple être utilisée pour des applications à très courte portée.

La figure 5 présente donc un mode de réalisation possible de la partie radar destinée notamment à produire le faisceau de navigation. Cette partie comporte une antenne monopulse 51 constituée d'une voie somme $V_\Sigma$, d'une voie différence en gîte $V_{\Delta S}$ et d'une voie différence en gisement $V_{\Delta G}$. Un isolement électromagnétique, par exemple supérieur à 45dB, est réalisé entre la voie somme et les voies différence. Pour l'émission, chaque voie différence est reliée à un modulateur 52 qui module l'onde à émettre selon une modulation de phase 0, $\pi$, comme précédemment défini, et la voie somme est par exemple reliée à un modulateur 53 qui module l'amplitude de l'onde à émettre. Ce modulateur est par exemple utilisé lorsqu'un code pseudoaléatoire de valeur nulle est généré sur la voie somme. Les entrées des modulateurs de la voie différence sont reliées à un commutateur hyperfréquence 54 qui commute les signaux fournis par un premier amplificateur 55 vers l'une ou l'autre de ces deux voies. L'entrée du modulateur de la voie somme est reliée à la sortie d'un deuxième amplificateur 56. Les signaux hyperfréquence fournis aux amplificateurs 55, 56 sont issus d'une même source hyperfréquence 57 via un coupleur 3dB 58. Un modulateur d'amplitude 59 est par exemple disposé entre la source hyperfréquence et le coupleur. Ce modulateur réalise une modulation à valeur moyenne nulle de l'amplitude du signal qu'il reçoit. Il est à cet effet commandé par un générateur d'enveloppe 60 qui commande par ailleurs un générateur de codes 61. Le générateur d'enveloppe 60 réalise l'enveloppe de la modulation précitée. Le générateur de code 61 sert notamment à fournir un signal de synchronisation préliminaire sur la voie somme et peut commander à cet effet le modulateur 53 de la voie somme. Il sert aussi à commander les modulateurs 52 des voies différence pour émettre sur ces voies un signal modulé selon un code pseudoaléatoire à valeur moyenne nulle. Il peut par ailleurs servir à commander, en fonction d'un signal, par exemple carré, fourni par le générateur d'enveloppe, le passage des phases de 0 à $\pi$ ou $\pi$ à 0 dans les modulateurs 52 des voies différence.

Le système radar tel que décrit précédemment permet de réaliser un faisceau de navigation émis par une antenne monopulse, permettant à des engins à guider à se rallier à ce faisceau, conformément au procédé selon l'invention. Comme il a été indiqué précédemment, il peut être par ailleurs nécessaire d'utiliser les fonctions radar à la réception, notamment pour permettre des mesures de position d'une cible à poursuivre, et permettre ainsi de commander la position d'antenne, et donc la direction de son faisceau, en fonction de la position de la cible. A cet effet, une seule voie de réception peut être utilisée, la voie somme notamment. Un duplexeur, ou circulateur hyperfréquence 62, est donc disposé sur la voie somme entre l'antenne et le modulateur 53 de cette voie. La sortie de réception de ce duplexeur est par exemple reliée à une entrée d'un mélangeur 63 dont l'autre entrée reçoit comme signal d'oscillateur local, par exemple un signal issu de la source de fréquence. Le signal de réception ainsi transposé en fréquence est transmis à des moyens 64 de réception et de traitement du signal classiques. Ces moyens sont par exemple synchronisés avec les signaux d'émission par l'intermédiaire du générateur de codes 61. Ce dernier reçoit par ailleurs un code destiné à fournir des informations aux engins guidés comme cela a été évoqué précédemment, ce code étant transmis par l'intermédiaire de la voie somme.

La figure 6 présente un mode de réalisation possible d'un récepteur. Ce dernier comporte par exemple en entrée un filtre 71 suivi d'un dispositif de détection directe 72. Le signal ainsi filtré et détecté est fourni à un amplificateur vidéo linéaire 73 à commande automatique de gain dont la sortie est reliée à un convertisseur analogique-numérique 74. Le signal ainsi numérisé est traité par deux corrélateurs 75, 76. Un corrélateur 75 est affecté au traitement du signal de la voie somme et un corrélateur 76 est affecté au signal de la voie différence. Les deux corrélateurs reçoivent néanmoins le même signal, qui est le signal de réception numérisé en sortie du convertisseur 74. Ces corrélateurs fonctionnent à partir de registres à décalage avec une fréquence d'échantillonnage plus élevée que celle de l'horloge de génération de code pseudo aléatoire, dans le cas où la modulation est réalisée par tel code. Cela permet notamment un fonctionnement asynchrone des corrélateurs, en particulier de celui destiné à extraire le signal de modulation de la voie différence. Un détecteur de pic de corrélation 77 est placé en sortie du corrélateur affecté au traitement de la voie somme. Un dispositif de retard 78 est connecté en sortie du détecteur 77. A partir de la détection d'un pic de corrélation, ce dispositif crée successivement un premier retard de T et un deuxième retard de 2T. A chaque retard est généré un signal. Un premier signal, généré selon le premier retard T, commande une première porte 79 dont l'entrée est reliée à la sortie du corrélateur 76 du traitement de la voie différence. De même, un deuxième signal, généré selon le deuxième retard 2T, commande une deuxième porte 80, dont l'entrée est reliée à la sortie du corrélateur 76 du traitement de la voie différence.

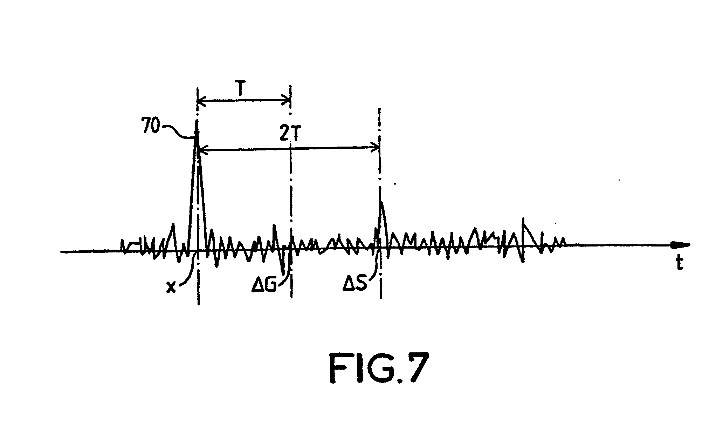

La figure 7 illustre la position dans le temps des signaux en sortie de la première et de la deuxième porte, respectivement d'amplitudes $\Delta$G et $\Delta$S. Ces signaux sont les signaux présents en sortie du corrélateur 76 du traitement de la voie différence respectivement T et 2T après le pic de corrélation 70 à la sortie du corrélateur 75 du traitement de la voie somme. L'écart de gisement, donnant le terme B évoqué précédemment pour le décodage en gisement, est K. $\Delta$G/$\Sigma$, et l'écart de site, donnant ce terme B pour le décodage en site, est K. $\Delta$S/$\Sigma$, K est un facteur d'échelle et $\Sigma$ est l'amplitude du signal correspondant à celui émis par la voie somme. Cette amplitude $\Sigma$ est par exemple le contenu la sortie du corrélateur de la voie somme ou encore la valeur moyenne du signal de x à T pour la voie différence en gisement 79 et entre x + T et x + 2T pour la voie différence en site, x étant l'instant du pic de corrélation sur la voie de traitement somme.

Un dispositif de démodulation 81, connecté en sortie du convertisseur analogique-numérique 74 permet par exemple de décoder des messages envoyés par la voie somme.

## Revendications

1. Procédé de guidage électromagnétique d'au moins un engin, le guidage étant réalisé par rapport à l'axe (1) du faisceau d'une antenne monopulse (51), par un codage dans l'espace du faisceau, **caractérisé en ce que** le codage est réalisé par la superposition d'une onde pure sur le diagramme somme et d'une onde modulée en amplitude à porteuse supprimée (31) sur le diagramme différence, pour reconstituer un signal (S) modulé en amplitude, le taux de modulation et la phase de ce dernier étant caractéristiques du dépointage de l'antenne.

2. Procédé selon la revendication 1, **caractérisé en ce que** le codage est réalisé par une modulation appropriée des signaux rayonnés par les diagrammes somme ($\Sigma$) et différence ($\Delta$), des moyens de réception disposés dans l'engin permettant de déterminer la position de ce dernier par rapport aux diagrammes de rayonnement de l'antenne, et donc sa position par rapport à l'axe de l'antenne, la détermination de cette position étant effectuée par démodulation des signaux captés par les moyens de réception.

3. Procédé selon l'une quelconque des revendications précédentes, caracténsé en ce que le signal modulé en amplitude à porteuse supprimée est un train d'impulsions à valeur moyenne nulle, modulées en phase $0, \pi$.

4. Procédé selon la revendication 3, **caractérisé en ce que** l'amplitude est une amplitude carrée, modulée en phase $0, \pi$.

**5.** Procédé selon l'une quelconque des revendications précédentes, **caractérisé en ce que** la modulation est un code pseudoaléatoire de valeur moyenne nulle.

**6.** Procédé selon l'une quelconque des revendications précédentes, **caractérisé en ce que** la phase de référence du signal différence modulé (31) est définie par un signal de synchronisation préliminaire transmis sur la voie somme avant une mesure de position aux moyens de réception de l'engin.

**7.** Procédé selon la revendication 6, **caractérisé en ce que** le signal de synchronisation est un signal modulé en amplitude suivant un code pseudoaléatoire prédéfini, comprimé au moyen d'un corrélateur à la réception.

**8.** Procédé selon l'une quelconque des revendications précédentes, **caractérisé en ce que** le même signal émis et réfléchi par une cible est utilisé pour poursuivre ladite cible, le signal réfléchi étant capté sur le diagramme somme de l'antenne.

**9.** Procédé selon l'une quelconque des revendications précédentes, **caractérisé en ce que** des informations sont transmises aux engins par le faisceau.

**10.** Procédé selon la revendication 9, **caractérisé en ce que** les informations communiquent la position de la cible par rapport au faisceau pour permettre la détermination de la position relative des engins à la cible.

**11.** Procédé selon l'une quelconque des revendications précédentes, **caractérisé en ce que** l'émission hyperfréquence se fait dans la bande Ku.

**12.** Dispositif pour la mise en oeuvre du procédé selon l'une quelconque des revendications précédentes, **caractérisé en ce qu'**il comporte au moins une partie radar produisant un faisceau codé dans l'espace, cette partie comprenant :

- une antenne monopulse (51) constituée d'une voie somme ($V_\Sigma$), d'une voie différence en gîte ($V_{\Delta S}$) et d'une voie différence en gisement ($V_{\Delta G}$), pour l'émission, chaque voie différence étant reliée à un modulateur (52) qui module l'onde à émettre ;
- un commutateur hyperfréquence (54) qui commute les signaux vers l'une ou l'autre des deux voies différence
- un amplicateur (55) des signaux des voies différence et un amplificateur (53) des signaux de la voie somme ;
- une source hyperfréquence (57) qui fournit les signaux hyperfréquence aux amplificateurs (55, 56) via un coupleur 3dB (58) ;
- un modulateur d'amplitude (59) disposé entre la source hyperfréquence et le coupleur, Ce modulateur réalisant une modulation à valeur moyenne nulle de l'amplitude du signal qu'il reçoit,
  le codage du faisceau étant réalisé par la superposition d'une onde pure sur le diagramme somme et d'une onde modulée en amplitude à porteuse supprimée (31) sur le diagramme différence, pour reconstituer un signal (S) modulé en amplitude, le taux de modulation et la phase de ce dernier étant caractéristiques du dépointage de l'antenne.

**13.** Dispositif selon la revendication 12, **caractérisé en ce qu'**un modulateur d'amplitude (53) est connecté en sortie de l'amplificateur (56) de la voie somme, le modulateur étant commandé par un générateur de code (61) pour moduler l'onde émise selon ce code.

**14.** Dispositif selon l'une quelconque des revendications 12 ou 13, **caractérisé en ce qu'**un duplexeur (62) est disposé sur la voie somme, la sortie de réception de ce duplexeur étant reliée à une entrée d'un mélangeur (63) dont l'autre entrée reçoit comme signal d'oscillateur local, le signal de réception ainsi transposé en fréquence est transmis à des moyens (64) de réception et de traitement du signal.

**15.** Dispositif selon l'une quelconque des revendications 12 à 14, **caractérisé en ce que** le récepteur comporte au moins deux corrélateurs (75, 76) traitant un signal de réception numérisé, un corrélateur (75) étant affecté au traitement du signal de la voie somme et un corrélateur (76) étant affecté au signal de la voie différence, un détecteur de pic de corrélation (77) étant placé en sortie du corrélateur affecté au traitement de la voie somme, un dispositif de retard (78) étant connecté en sortie du détecteur (77), à partir de la détection d'un pic de corrélation, ce dispositif créant successivement un premier retard de T et un deuxième retard de 2T pour échantillonner les signaux à ces instants les signaux en sortie du corrélateur (76) de la voie différence, le taux de modulation en gisement et en site étant fonction des rapports (K. $\Delta G/\Sigma$, K. $\Delta S/\Sigma$) des signaux ainsi échantillonnés sur le signal de la voie somme.

16. Dispositif selon la revendication 15, **caractérisé en ce que** les corrélateurs (75, 76) fonctionnent à partir de registres à décalage avec une fréquence d'échantillonnage plus élevée que celle de l'horloge de génération de code pseudo aléatoire de modulation

17. Dispositif selon l'une quelconque des revendications 15 ou 16, caractérisé en ce le récepteur comporte en entrée un filtre (71) et dispositif de détection directe (72) connecté en sortie du filtre (17), le signal ainsi filtré et détecté étant fourni à un amplificateur vidéo linéaire (73) à commande automatique de gain dont la sortie est reliée à un convertisseur analogique-numérique (74), le signal ainsi numérisé étant traité par les deux corrélateurs (75, 76).

**Patentansprüche**

1. Verfahren zur elektromagnetischen Führung wenigstens einer gelenkten Rakete, wobei die Führung in bezug auf die Achse (1) des Strahlenbündels einer Monopulsantenne (51) durch eine Codierung im Raum des Strahlenbündels ausgeführt wird, **dadurch gekennzeichnet, daß** die Codierung durch die Überlagerung einer reinen Welle mit dem Summendiagramm und einer amplitudenmodulierten Welle mit unterdrücktem Träger (31) mit dem Differenzdiagramm erfolgt, um ein amplitudenmoduliertes Signal (S) wiederherzustellen, wobei der Modulationsanteil und die Phase dieses letzteren für die Fehlweisung der Antenne charakteristisch sind.

2. Verfahren nach Anspruch 1, **dadurch gekennzeichnet, daß** die Codierung durch eine geeignete Modulation der von dem Summendiagramm ($\Sigma$) und von dem Differenzdiagramm ($\Delta$) abgestrahlten Signale erfolgt, wobei in der Rakete angeordnete Empfangsmittel ermöglichen, die Position dieser letzteren in bezug auf die Strahlungsdiagramme der Antenne und daher ihre Position in bezug auf die Achse der Antenne zu bestimmen, wobei die Bestimmung dieser Position durch Demodulation der von den Empfangsmitteln eingefangenen Signale ausgeführt wird.

3. Verfahren nach einem der vorhergehenden Ansprüche, **dadurch gekennzeichnet, daß** das amplitudenmodulierte Signal mit unterdrücktem Träger eine Impulsfolge mit Mittelwert null und moduliert mit Phase 0, $\pi$ ist.

4. Verfahren nach Anspruch 3, **dadurch gekennzeichnet, daß** die Amplitude eine Rechteckamplitude ist, die mit Phase 0, $\pi$ moduliert ist.

5. Verfahren nach einem der vorhergehenden Ansprüche, **dadurch gekennzeichnet, daß** die Modulation ein pseudozufälliger Code mit Mittelwert null ist.

6. Verfahren nach einem der vorhergehenden Ansprüche, **dadurch gekennzeichnet, daß** die Referenzphase des modulierten Differenzsignals (31) durch ein vorläufiges Synchronisationssignal definiert ist, das auf dem Summenweg vor einer Messung der Position an die Empfangsmittel der Rakete übertragen wird.

7. Verfahren nach Anspruch 6, **dadurch gekennzeichnet, daß** das Synchronisationssignal ein gemäß einem im voraus definierten pseudozufälligen Code amplitudenmoduliertes Signal ist, das mittels eines Korrelators beim Empfang komprimiert wird.

8. Verfahren nach einem der vorhergehenden Ansprüche, **dadurch gekennzeichnet, daß** dasselbe Signal, das durch ein Ziel ausgesendet und reflektiert wird, für die Verfolgung dieses Ziels verwendet wird, wobei das reflektierte Signal auf dem Summendiagramm der Antenne eingefangen wird.

9. Verfahren nach einem der vorhergehenden Ansprüche, **dadurch gekennzeichnet, daß** an die Raketen durch das Strahlenbündel Informationen übertragen werden.

10. Verfahren nach Anspruch 9, **dadurch gekennzeichnet, daß** die Informationen die Position des Ziels in bezug auf das Strahlenbündel übermitteln, um die Bestimmung der relativen Positionen der Raketen in bezug auf das Ziel zu ermöglichen.

11. Verfahren nach einem der vorhergehenden Ansprüche, **dadurch gekennzeichnet, daß** die Höchstfrequenzemission im Ku-Band erfolgt.

12. Vorrichtung für die Ausführung des Verfahrens nach einem der vorhergehenden Ansprüche, **dadurch gekennzeichnet, daß** sie wenigstens einen Radarabschnitt umfaßt, der ein im Raum codiertes Strahlenbündel erzeugt, wobei dieser Abschnitt umfaßt:

- eine Monopulsantenne (51), die für die Aussendung aus einem Summenweg ($V_\Sigma$), aus einem Rollwinkel-Differenzweg ($V_{\Delta S}$) und aus einem Seitenwinkel-Differenzweg ($V_{\Delta G}$) gebildet ist, wobei jeder Differenzweg mit einem Modulator (52) verbunden ist, der die auszusendende Welle moduliert;

- einen Höchstfrequenz-Umschalter (54), der die Signale zu dem einen oder dem anderen der zwei Differenzwege umschaltet;

- einen Verstärker (55) für die Signale der Differenzwege und einen Verstärker (53) für die Signale des Summenwegs;

- eine Höchstfrequenz-Quelle (57), die die Höchstfrequenzsignale an die Verstärker (55, 56) über einen 3 dB-Koppler (58) liefert;

- einen Amplitudenmodulator (59), der zwischen der Höchstfrequenz-Quelle und dem Koppler angeordnet ist, wobei dieser Modulator an dem Signal, das er empfängt, eine Amplitudenmodulation mit Mittelwert null ausführt,

wobei die Codierung des Strahlenbündels durch die Überlagerung einer reinen Welle mit dem Summendiagramm und einer amplitudenmodulierten Welle mit unterdrücktem Träger (31) mit dem Differenzdiagramm verwirklicht wird, um ein amplitudenmoduliertes Signal (S) wiederherzustellen, wobei der Amplitudenanteil und die Phase dieses letzteren für die Fehlweisung der Antenne charakteristisch sind.

13. Vorrichtung nach Anspruch 12, **dadurch gekennzeichnet, daß** an den Ausgang des Verstärkers (56) des Summenwegs ein Amplitudenmodulator (53) angeschlossen ist, der durch einen Code-Generator (61) gesteuert wird, um die ausgesendete Welle gemäß diesem Code zu modulieren.

14. Vorrichtung nach einem der Ansprüche 12 oder 13, **dadurch gekennzeichnet, daß** in dem Summenweg ein Duplexer (62) angeordnet ist, wobei der Empfangsausgang dieses Duplexers mit einem Eingang eines Mischers (63) verbunden ist, dessen anderer Eingang ein Hilfsoszillatorsignal empfängt, wobei das somit frequenztransponierte Empfangssignal an Mittel (64) für den Empfang und die Verarbeitung des Signals übertragen wird.

15. Vorrichtung nach einem der Ansprüche 12 bis 14, **dadurch gekennzeichnet, daß** der Empfänger wenigstens zwei Korrelatoren (75, 76) umfaßt, die ein digitalisiertes Empfangssignal verarbeiten, wobei ein Korrelator (75) der Verarbeitung des Signals des Summenwegs zugewiesen ist und ein Korrelator (76) dem Signal des Differenzwegs zugewiesen ist, wobei am Ausgang des der Verarbeitung des Summenwegs zugewiesenen Korrelators ein Korrelationsspitzen-Detektor (77) angeordnet ist, wobei an den Ausgang des Detektors (77) eine Verzögerungsvorrichtung (78) angeschlossen ist, wobei diese Vorrichtung ausgehend von der Erfassung einer Korrelationsspitze nacheinander eine erste Verzögerung T und eine zweite Verzögerung 2T erzeugt, um zu diesen Zeitpunkten die Signale am Ausgang des Korrelators (76) des Differenzwegs abzutasten, wobei der Modulationsanteil in Seiten- und Höhenrichtung von den Verhältnissen ($K \cdot \Delta G/\Sigma$, $K \cdot \Delta S/\Sigma$) der somit abgetasteten Signale zu dem Signal des Summenwegs abhängt.

16. Vorrichtung nach Anspruch 15, **dadurch gekennzeichnet, daß** die Korrelatoren (75, 76) ausgehend von Schieberegistern mit einer Abtastfrequenz arbeiten, die höher als jene des Takts für die Erzeugung des pseudozufälligen Modulationscodes ist.

17. Vorrichtung nach einem der Ansprüche 15 oder 16, **dadurch gekennzeichnet, daß** der Empfänger am Eingang ein Filter (71) und eine am Ausgang des Filters (17) angeschlossene direkte Erfassungsvorrichtung (72) umfaßt, wobei das somit gefilterte und erfaßte Signal an einen linearen Videoverstärker (73) mit automatischer Verstärkungssteuerung geliefert wird, dessen Ausgang mit einem Analog/Digital-Umsetzer (74) verbunden ist, wobei das auf diese Weise digitalisierte Signal durch die zwei Korrelatoren (75, 76) verarbeitet wird.

**Claims**

1. Process for the electromagnetic guidance of at least one craft, the guidance being carried out with respect to the axis (1) of the beam of a monopulse antenna (51), by coding in space of the beam, **characterized in that** the coding is carried out by superposing a pure wave onto the sum pattern and a suppressed-carrier amplïtude modulated wave (31) onto the difference pattern, so as to reconstruct an amplitude modulated signal (S), the degree of modulation and the phase of the latter being characteristic of the aim offset of the antenna.

2. Process according to Claim 1, **characterized in that** the coding is carried out by appropriate modulation of the signals radiated by the sum pattern ($\Sigma$) and difference pattern (A), reception means disposed in the craft making it possible to determine the position of the latter with respect to the antenna radiation patterns, and hence its position with respect to the axis of the antenna, the determination of this position being performed by demodulating the signals captured by the reception means.

3. Process according to any one of the preceding claims, **characterized in that** the suppressed-carrier amplitude modulated signal is a pulse train with zero mean value, $0,\pi$ phase modulated.

4. Process according to Claim 3, **characterized in that** the amplitude is a $0,\pi$ phase modulated square amplitude.

5. Process according to any one of the preceding claims, **characterized in that** the modulation is a pseudorandom code of zero mean value.

6. Process according to any one of the preceding claims, **characterized in that** the reference phase of the modulated difference signal (31) is defined by a preliminary synchronization signal transmitted on the sum pathway before a position measurement to the reception means of the craft.

7. Process according to Claim 6, **characterized in that** the synchronization signal is an amplitude modulated signal modulated according to a predefined pseudorandom code, compressed by means of a correlator at the reception end.

8. Process according to any one of the preceding claims, **characterized in that** the same signal transmitted and reflected by a target is used to track the said target, the reflected signal being captured on the sum pattern of the antenna.

9. Process according to any one of the preceding claims, **characterized in that** information is sent to the various craft by the beam.

10. Process according to Claim 9, **characterized in that** the information conveys the position of the target with respect to the beam so as to allow the determination of the relative position of the various craft to the target.

11. Process according to any one of the preceding claims, **characterized in that** the microwave transmission is made in the Ku band.

12. Device for implementing the process according to any one of the preceding claims, **characterized in that** it comprises at least one radar part producing a beam coded in space, this part comprising:

   - a monopulse antenna (51) consisting of a sum pathway ($V_\Sigma$), of a list difference pathway ($V_{\Delta S}$) and of a bearing difference pathway ($V_{\Delta G}$), for transmission, each difference pathway being linked to a modulator (52) which modulates the wave to be transmitted;
   - a microwave switch (54) which switches the signals to one or other of the two difference pathways
   - an amplifier (55) for the signals of the difference pathways and an amplifier for the signals of the sum pathway;
   - a microwave source (57) which supplies the microwave signals to the amplifiers (55, 56) via a 3dB coupler (58) ;
   - an amplitude modulator (59) disposed between the microwave source and the coupler, this modulator carrying out a modulation with zero mean value of the amplitude of the signal which it receives,
   the coding of the beam being carried out by the superposition of a pure wave onto the sum pattern and of a suppressed-carrier amplitude modulated wave (31) onto the difference pattern, so as to reconstruct an amplitude modulated signal (S), the degree of modulation and the phase thereof being characteristic of the aim offset of the antenna.

**13.** Device according to Claim 12, **characterized in that** an amplitude modulator (53) is connected at the output of the amplifier (56) of the sum pathway, the modulator being controlled by a code generator (61) so as to modulate the wave transmitted according to this code.

**14.** Device according to any one of Claims 12 or 13, **characterized in that** a duplexer (62) is disposed on the sum pathway, the reception output of this duplexer being linked to an input of a mixer (63) whose other input receives as local oscillator signal, the reception signal thus frequency transposed is sent to reception and signal processing means (64).

**15.** Device according to any one of Claims 12 to 14, **characterized in that** the receiver comprises at least two correlators (75, 76) processing a digitized reception signal, a correlator (75) being assigned to the processing of the signal of the sum pathway and a correlator (76) being assigned to the signal of the difference pathway, a correlation spike detector (77) being placed at the output of the correlator assigned to the processing of the sum pathway, a delay device (78) being connected at the output of the detector (77), onward of the detection of a correlation spike, this device successively creating a first delay of T and a second delay of 2T so as to sample the signals at these instants the signals at the output of the correlator (76) of the difference pathway, the degree of modulation in terms of bearing and elevation being dependent on the ratios ($K.\Delta G/\Sigma$, $K.\ \Delta S/\Sigma$) of the signals thus sampled over the signal of the sum pathway.

**16.** Device according to Claim 15, **characterized in that** the correlators (75, 76) operate on the basis of shift registers with a higher sampling frequency than that of the clock generating the pseudorandom modulation code.

**17.** Device according to any one of Claims 15 or 16, **characterized in that** the receiver comprises at input a filter (71) and a direct detection device (72) which is connected at the output of the filter (17), the signal thus filtered and detected being supplied to a linear video amplifier (73) with automatic gain control whose output is linked to an analogue/digital converter (74), the signal thus digitized being processed by the two correlators (75, 76).

FIG.1

EP 1 181 573 B1

FIG.2

FIG.3

FIG.4

FIG. 5

FIG.6

EP 1 181 573 B1

FIG.7